Europäisches Patentamt

European Patent Office

Office européen des brevets

(11) Publication number: **0 382 244**
**A2**

(12) ## EUROPEAN PATENT APPLICATION

(21) Application number: 90102585.8

(51) Int. Cl.5: **G11B 5/235, G11B 5/127**

(22) Date of filing: 09.02.90

(30) Priority: 10.02.89 JP 32003/89
20.02.89 JP 39945/89
20.06.89 JP 157395/89
20.06.89 JP 157397/89

(43) Date of publication of application:
16.08.90 Bulletin 90/33

(84) Designated Contracting States:
DE ES FR GB

(71) Applicant: SANYO ELECTRIC CO., LTD.
2-18, Keihan-hondori
Moriguchi-shi Osaka(JP)

(72) Inventor: Yoshikawa, Hideki
16-22, Tatsumiminami 1-chome
Ikuno-ku, Osaka(JP)
Inventor: Yasuda, Isao
11-11, Hoshidayamate 4-chome
Katano-shi, Osaka(JP)
Inventor: Yamamoto, Tomomi
10-49, Asahigaokacho
Hirakata-shi, Osaka(JP)

(74) Representative: Glawe, Delfs, Moll & Partner
Patentanwälte
Postfach 26 01 62
D-8000 München 26(DE)

(54) **Magnetic head and process for producing same.**

(57) A magnetic head having a pair of core half segments opposed to each other face-to-face, with a magnetic gap formed therebetween, and bonded to each other with a joint layer. The joint layer is formed by a nonmagnetic oxide layer having a high melting point and extending over the joint faces of the segments. A portion of the nonmagnetic oxide layer functions as the magnetic gap. The nonmagnetic oxide layer is formed by causing a solution of organic metal compound to penetrate into a space between a pair of core half members providing the pair of core half segments and heating the solution to change the solution to a sol and then to a gel and eventually solidify the solution.

FIG.1

## MAGNETIC HEAD AND PROCESS FOR PRODUCING SAME

### FIELD OF THE INVENTION

The present invention relates to magnetic heads for use in magnetic recording-reproduction apparatus such as video cassette recorders and video disc players, and more particularly to a magnetic head having a joint layer of nonmagnetic oxide formed between at least two components thereof and to a process for producing the same.

### BACKGROUND OF THE INVENTION

With conventional magnetic heads, for example, for use in video cassette recorders, a pair of magnetic core half segments are arranged end-to-end with $SiO_2$ or like nonmagnetic material provided therebetween to form a magnetic gap and are fixedly joined to each other with a bonding agent such as silver solder.

To meet a demand to record data with a high density in recent years, recording media with a high coercive force have been developed. For use with such media of high coercive force, magnetic heads have also been developed wherein a magnetic metal material of high maximum magnetic flux density is used.

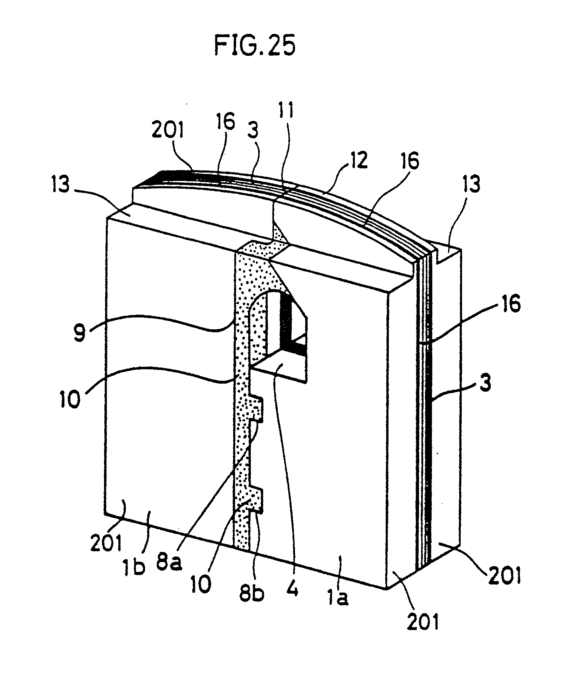

For example, Unexamined Japanese Patent Publication SHO 62-119709, etc. disclose high-frequency magnetic heads of the laminate type which comprise a first core half segment 1a and a second core half segment lb which are joined to each other as seen in Fig. 25. Each of the core half segments comprises a pair of nonmagnetic substrates 201, 201 of crystallized glass, nonmagnetic ceramic or the like, a laminated thin film 3 formed over the inner surface of one of the nonmagnetic substrates 201 and comprising a thin magnetic metal film as of Sendust and a thin insulating film as of $SiO_2$, and a bonding glass layer 16 provided between the laminated thin film 3 and the other nonmagnetic substrate 201. A coil groove 4 is formed in the first core half segment 1a. The two core half segments 1a, 1b have their joint faces, i.e., gap defining faces, opposed to each other with a thin nonmagnetic film of $SiO_2$ or the like formed therebetween to define a magnetic gap 11 at the opposed (butt) portion. The two core half segments 1a, 1b are bonded to each other with a glass 10 having a low melting point and filled in grooves 8a, 8b and 9. For sliding contact with the recording medium, the head has a slide face 12 which is formed with cutout grooves 13, 13 at its opposite sides to ensure smooth contact with the medium.

The magnetic head has at one side thereof opposite to the magnetic gap 11 a back gap portion locally formed with the glass grooves 8a, 8b, which result in an impaired reproduction efficiency. Further the pair of core half segments 1a, 1b are bonded together with the glass not over the entire area of their joint faces but only at a slender striplike region for reasons involved in the manufacturing process. Thus, the head has the problem of being insufficient in bond strength.

The bond strength may be improved by forming a glass layer over the entire joint faces of the two core half segments, with the glass layer serving also as a gap spacer, whereas a problem then arises in respect of heat resistance because glass of low melting point must invariably be used for the glass layer with this magnetic head.

The magnetic head shown in Fig. 25 has another problem. The soft glass layers 16, 16 for bonding the nonmagnetic substrates 201, 201 to the laminate 3 are exposed at the slide face 12 to be brought into sliding contact with the recording medium. When worn, the glass layers form indentations, which impair the contact of the magnetic head with the recording medium, with the result that data or signals can not be recorded or reproduced satisfactorily.

Furthermore, the process for manufacturing the magnetic head requires not only the step of machining the glass grooves 8a, 8b, 9 but also a heating step for filling glass therein and a cooling step for bonding the two core half segments to each other. Thus, there is the problem that the manufacturing process is complex. Additionally, machining the glass grooves entails the problem that deposition of impurities lowers the cleanness of the laminate forming surfaces of the nonmagnetic substrates 201, 201 to reduce the bond strength of the laminate and entail impaired magnetic characteristics.

On the other hand, Unexamined Japanese Patent Publication SHO 63-251908 discloses a method of bonding a protective plate to a component of a magnetic head with use of silica sol which is prepared by a process separate from the process for producing the magnetic head, by applying the silica sol to the surface of the component to be bonded to the protective plate, pressing the plate against the coated surface and heating the assembly. With this method, the OH groups or OR groups on the surface of the bonding agent and the OH groups adsorbed by the surface of the material to be joined undergo hydrolysis to form Si-O-A (wherein A is an atom of the material to be joined) to effect bonding, so that the bond strength is dependent on the amount of OH groups participating in the bonding. However, the conventional method has the problem of failing to give sufficient bond strength since the amount of OH groups or OR groups per unit volume of the silica sol prepared is definite and further since the amount of OH groups or OR groups decreases due to the subsequent hydrolysis.

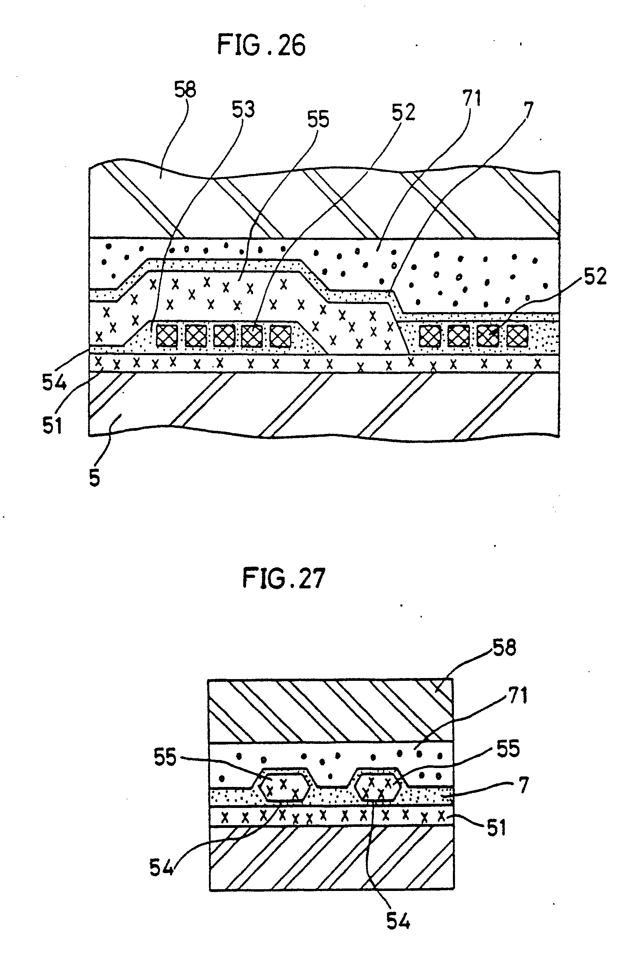

For example, Unexamined Japanese Patent Publication SHO 62-46416, etc. disclose a thin-film magnetic head suited to high-density magnetic recording or reproduction. As shown in Figs. 26 and 27, the disclosed magnetic head comprises, as formed over a substrate 5 of Ni-Zn ferrite or like magnetic material or crystallized glass or like nonmagnetic material, a lower magnetic layer 51 of Sendust or like ferromagnetic metal material, a spiral conductor coil layer 52 of Cu or like conductive material, an insulating layer 53 covering the coil layer and made of $SiO_2$ or like nonmagnetic insulating material, a gap spacer 54 of $SiO_2$ or like nonmagnetic material for forming a magnetic gap, an upper magnetic layer 55 of Sendust or like ferromagnetic material, and a protective layer 7 of $SiO_2$ or like nonmagnetic material. A protective plate 58 of $BaTiO_3$ or like nonmagnetic material is bonded to the protective layer 7 with glass 71 of low melting point.

Like the magnetic head of Fig. 25, this thin-film magnetic head,wherein the glass layer 71 needs to have a thickness of about 30 micrometers, also has the problem that the glass layer 71 exposed on the face of the head to be in sliding contact with the recording medium wears to result in impaired recording-reproduction characteristics.

SUMMARY OF THE INVENTION

An object of the present invention is to provide a magnetic head which comprises a pair of core half segments bonded to each other by a joint layer and in which the joint layer is in the form of a nonmagnetic oxide layer having a high melting point and extending over the joint surfaces of both the core half segments, the local portion of the nonmagnetic oxide layer at the top side of the head providing a magnetic gap. With the magnetic head, the pair of core half segments can be bonded together with improved strength by the joint layer having enhanced heat resistance, while the face of the head to be in sliding contact with recording media can be inhibited from wearing unevenly.

Another object of the present invention is to provide a process for producing the above magnetic head which comprises the steps of preparing a pair of core half members for providing the pair of core half segments, arranging the pair of core half members as opposed to each other face-to-face with a predetermined clearance formed therebetween and causing a solution of an organic metal compound to penetrate into the clearance, solidifying the solution by heating to form a nonmagnetic oxide layer and bonding the pair of core half members to each other with the nonmagnetic oxide layer, and machining the resulting assembly to obtain a head chip having a magnetic gap provided by a portion of the nonmagnetic oxide layer. According to this process, the solution of organic metal compound to be used in the step of bonding the pair of core half members together contains a large amount of hydroxyl groups (OH groups) or alkoxyl groups (OR groups), so that even if the amount of OH groups or OR groups decreases during the solidification of the solution, OH groups or OR groups are available in a quantity sufficient to effect the bonding. Consequently, satisfactory bond strength can be obtained by the bond of -A-O-M- (wherein A is a metal atom in the material to be bonded, M is a metal atom in the nonmagnetic oxide layer) produced at the interface between the material and the nonmagnetic oxide layer.

Moreover, the above process, wherein the joint layer between the two core half segments and the magnetic gap are formed at the same time, is simpler than the prior-art process which requires a heating step for forming the gap and also for bonding the core half segments.

Another object of the present invention is to provide a process for producing a thin-film magnetic head wherein a protective plate is bonded to the upper portion of a head chip with a joint layer by the steps of forming on the head chip a protective layer made of a nonmagnetic material and having a flat upper surface, causing a solution of organic metal compound containing hydroxyl groups (OH groups) or alkoxyl groups (OR groups) to penetrate into a space between the upper surface of the protective layer and the protective plate placed thereover, and solidifying the solution by heating to form a nonmagnetic oxide layer and thereby bond the protective plate to the protective layer.

This process produces the above-mentioned bond of -A-O-M- at the interface between the nonmagnetic oxide layer and the material to be bonded to give high bond strength. Accordingly, the thin-film magnetic head obtained by the process is free of the likelihood that the face thereof for sliding contact with the recording medium will wear unevenly to produce an indentation, consequently retaining satisfactory recording-reproduction performance over a prolonged period of time.

Another object of the present invention is to provide a magnetic head comprising a core half segment in the form of an assembly of a main core portion and a nonmagnetic substrate bonded thereto by a joint layer formed therebetween, the joint layer being a nonmagnetic oxide layer formed by solidifying a solution of organic metal compound containing OH groups and/or OR groups, and a process for producing the magnetic core. The magnetic head and the production process have the same advantage as above; the joint layer has an improved strength, and the process is simplified.

Still another object of the present invention is to provide a magnetic head comprising a pair of core half segments, each of the core half segments comprising a main core portion and two nonmagnetic substrates provided on the respective opposite sides thereof, the main core portion comprising a magnetic thin film composed of one or a plurality of layers and formed over each of the opposed surfaces of the two nonmagnetic substrates, and a joint layer provided between the magnetic thin films on the respective nonmagnetic substrates, the joint layer being formed by a nonmagnetic oxide layer, and to provide a process for producing the magnetic head. The magnetic head, as well as the production process, has the same advantage as above. Furthermore, the nonmagnetic oxide layer of the magnetic head serves as a thin insulating film between the magnetic thin films for inhibiting eddy current losses in the high-frequency range.

BRIEF DESCRIPTION OF THE DRAWINGS

Fig. 1 is a perspective view of a magnetic head of the laminated core type as a first embodiment;

Figs. 2 to 8 show a process for producing the magnetic head of the first embodiment;

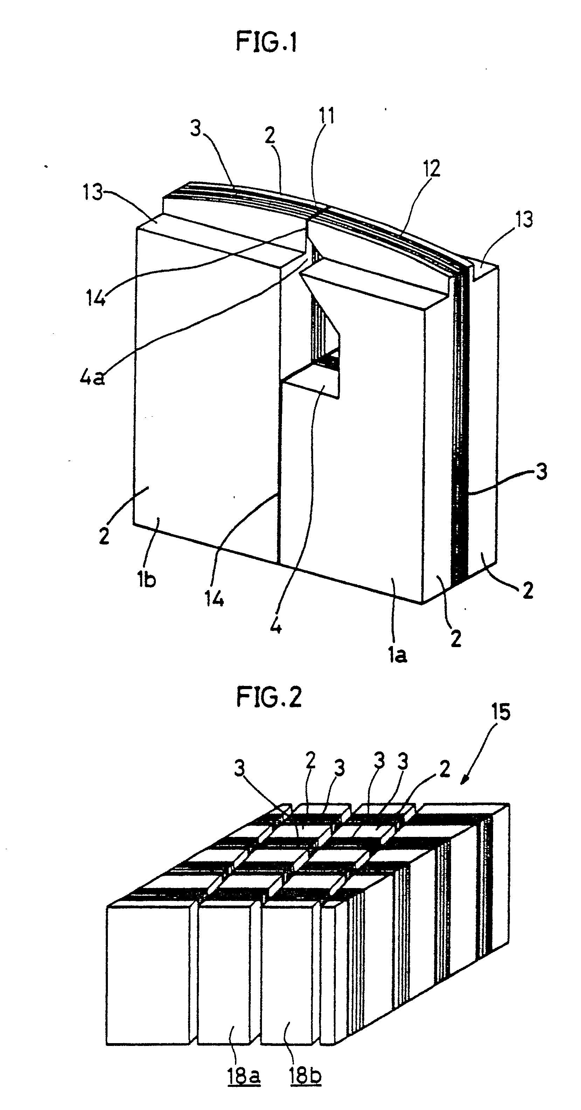

Fig. 2 is a perspective view of a pair of core block half segments cut off from a laminated block;

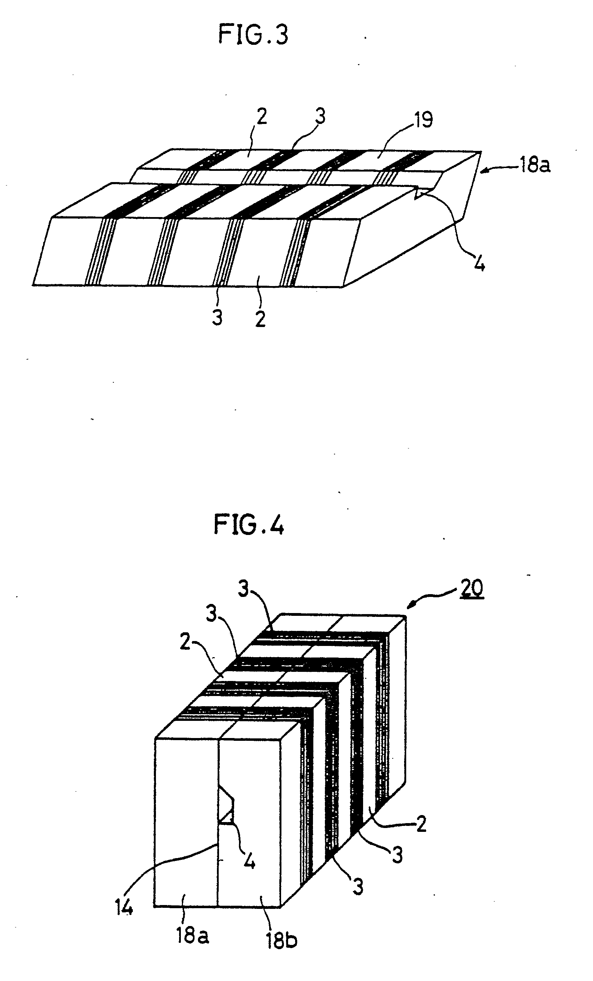

Fig. 3 is a perspective view showing a coil groove as formed in one of the core block half segments;

Fig. 4 is a perspective view of a core block obtained by bonding the pair of core block half segments together with a nonmagnetic oxide layer;

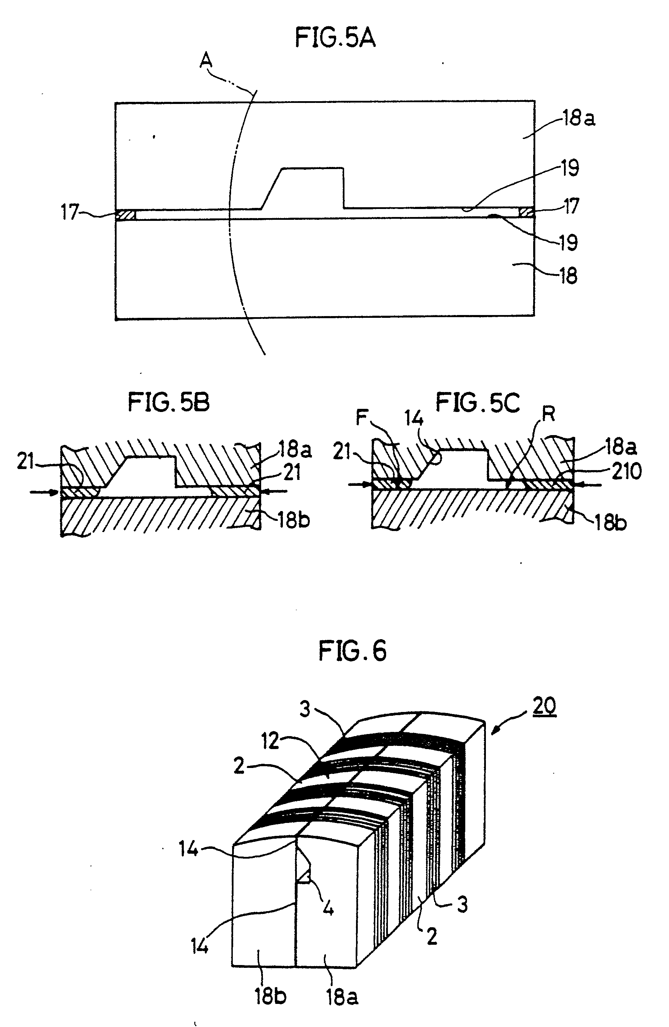

Fig. 5A is a side elevation of the pair of core block half segments as arranged face-to-face with spacers interposed therebetween;

Fig. 5B is a diagram illustrating a silicon alkoxide solution while it is being caused to penetrate into a space between the pair of core block half segments;

Fig. 5C is a diagram showing a metal alkoxide solution while it is being caused to penetrate into a back gap portion;

Fig. 6 is a perspective view of the core block formed with a slide face;

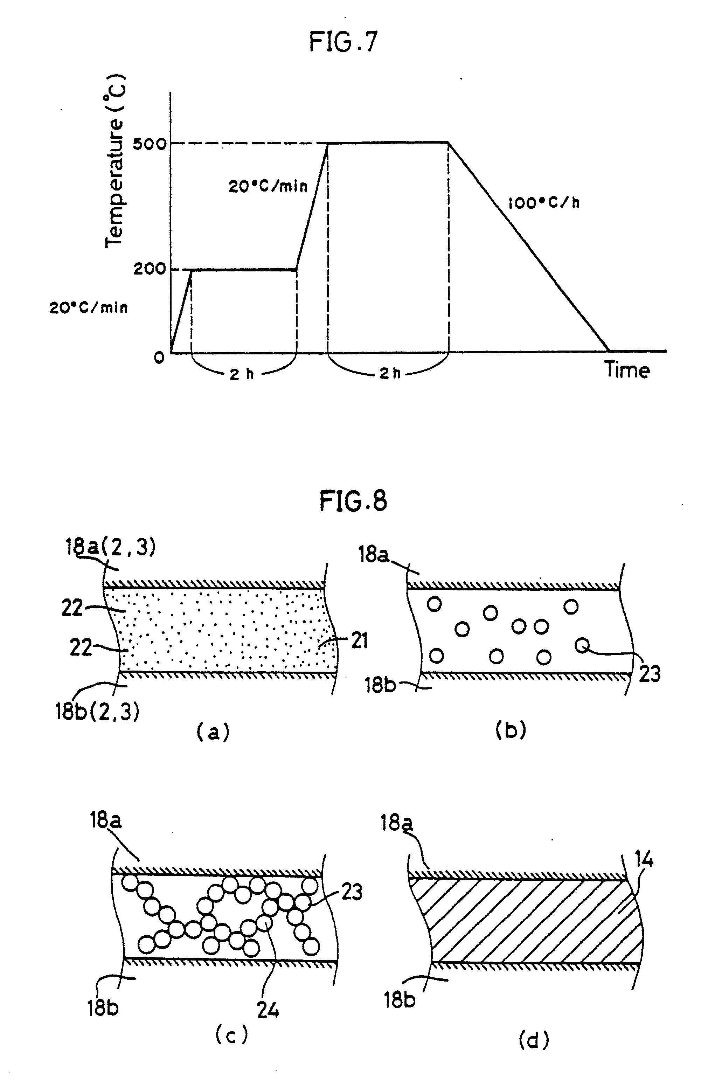

Fig. 7 is a graph showing conditions for heating steps;

Figs. 8, (a) to (d) are diagrams showing the process of change of the silicon alkoxide solution to the nonmagnetic oxide layer;

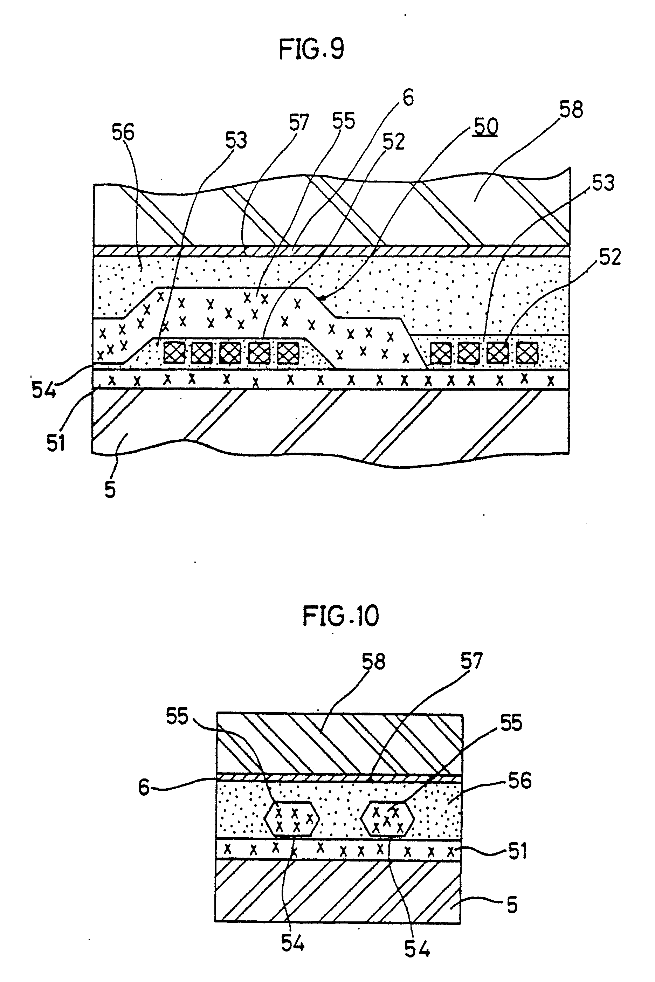

Fig. 9 is a sectional view of a thin-film magnetic head as a second embodiment;

Fig. 10 is a front view of the thin-film magnetic head;

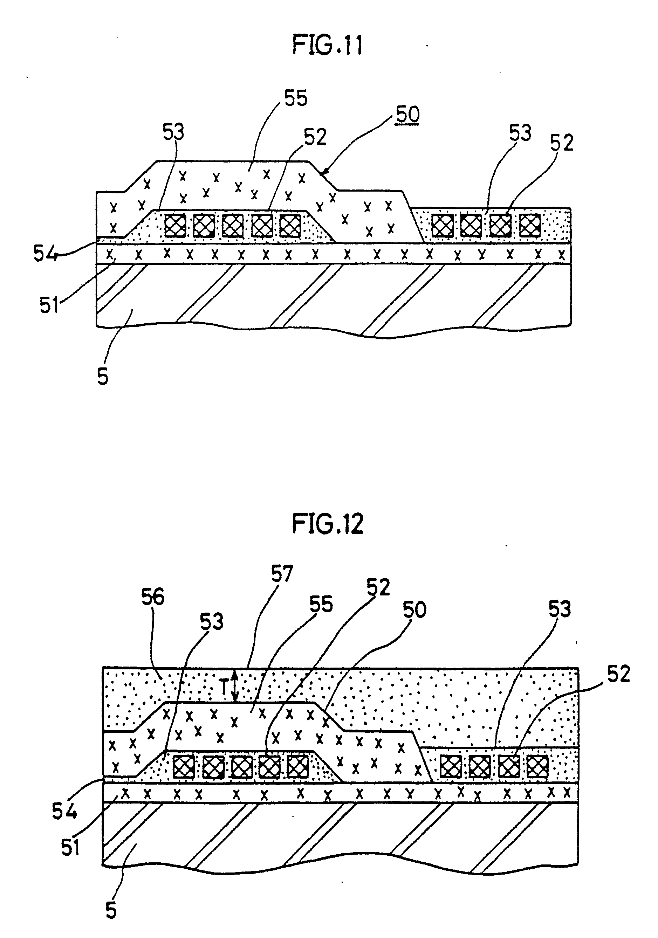

Figs. 11 to 14 show a process for producing the magnetic head of the second embodiment;

Fig. 11 is a sectional view of the head chip;

Fig. 12 is a sectional view showing the head chip and a protective layer formed thereon;

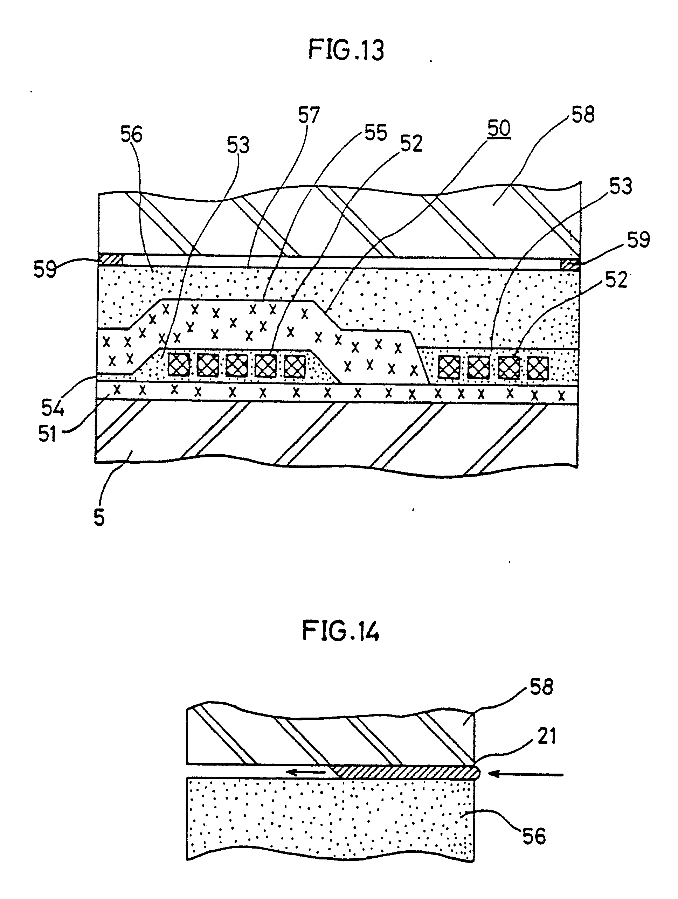

Fig. 13 is a sectional view showing spacers as provided between the protective layer and a protective plate;

Fig. 14 is a diagram illustrating a silicon alkoxide solution while it is being caused to penetrate into the space between the protective layer and the protective plate;

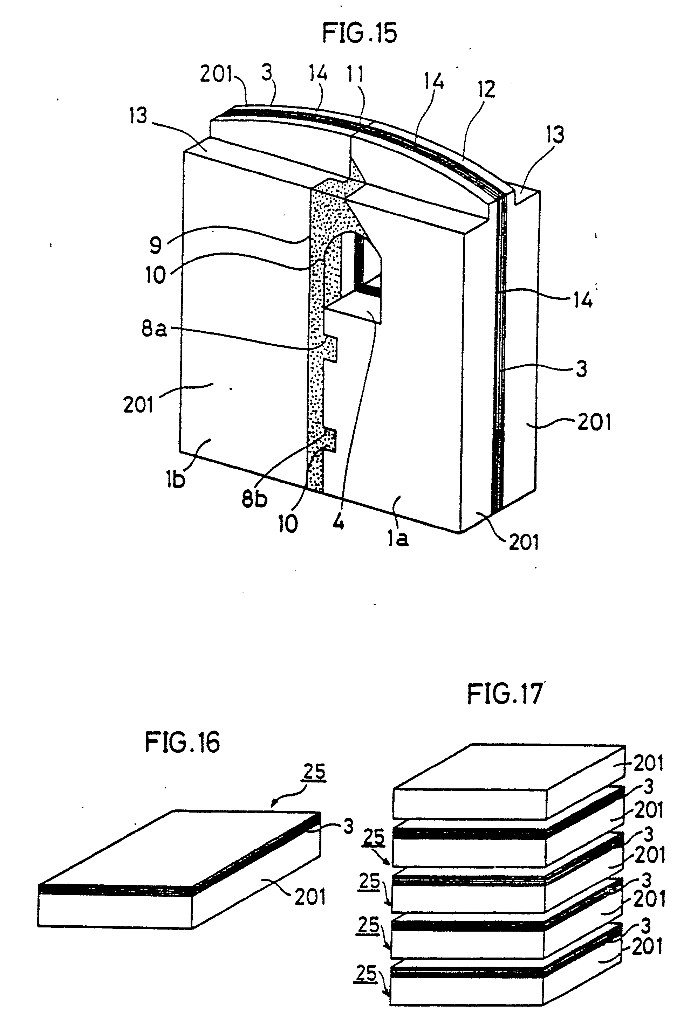

Fig. 15 is a perspective view of a magnetic head of the laminated core type as a third embodiment;

Figs. 16 to 18 show a process for producing the magnetic head of the third embodiment;

Fig. 16 is a perspective view of a laminated substrate;

Fig. 17 is a perspective view showing laminated substrates as stacked up;

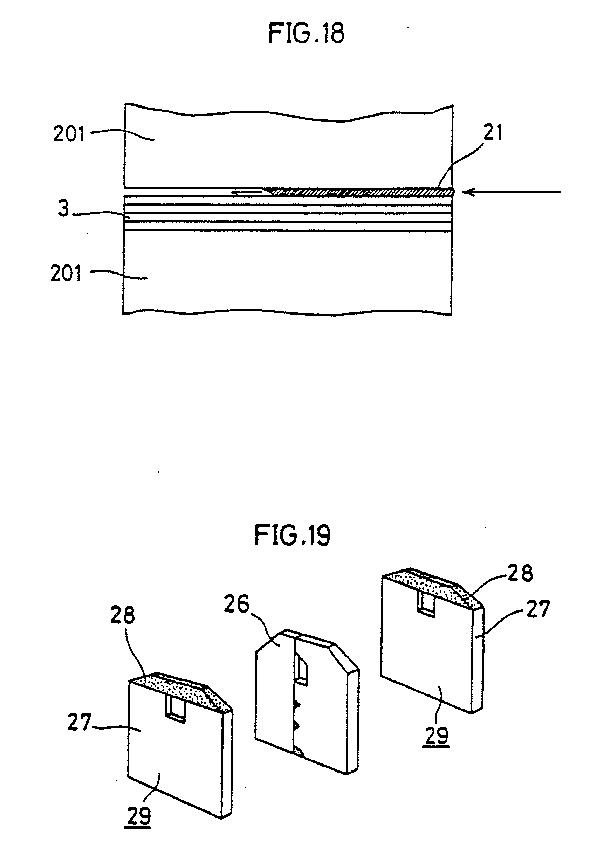

Fig. 18 is a diagram illustrating a silicon alkoxide solution while it is being caused to penetrate into a space between a nonmagnetic substrate and a laminated thin film;

Fig. 19 is an exploded perspective view showing a bulk-type magnetic head as another embodiment;

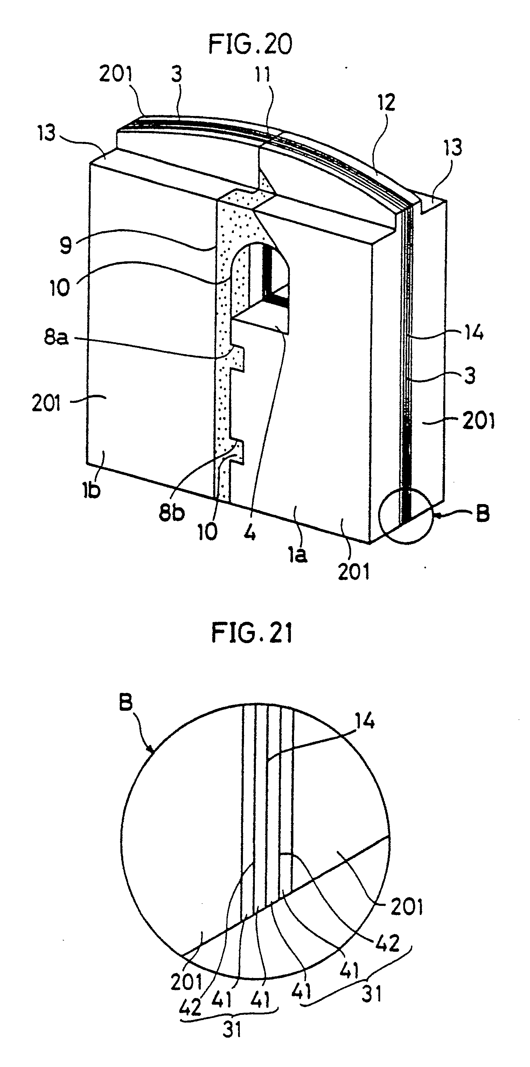

Fig. 20 is a perspective view of a magnetic head of the laminated core type as a fourth embodiment;

Fig. 21 is a perspective view showing the portion B in Fig. 20 on an enlarged scale;

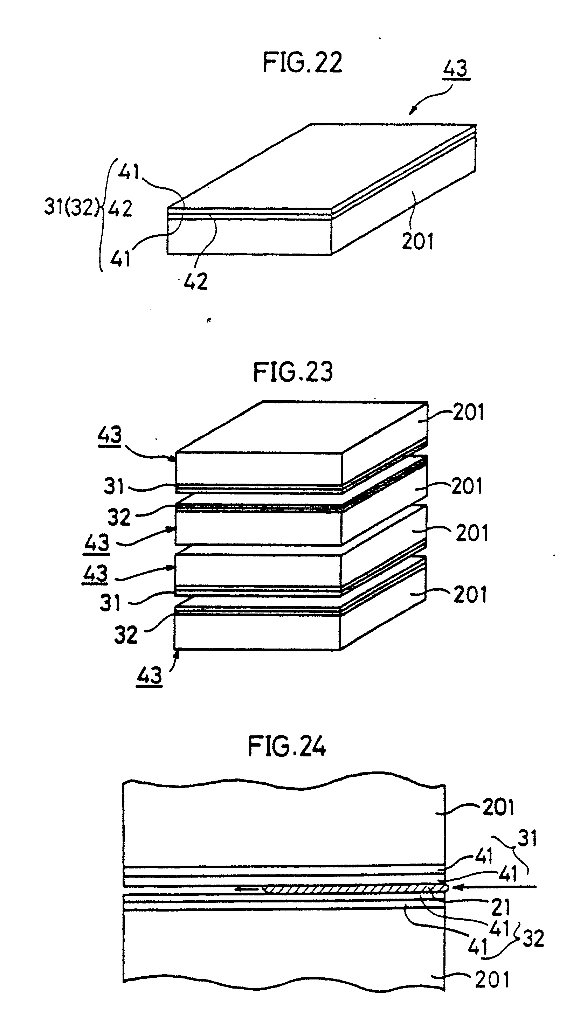

Figs. 22 to 24 show a process for producing the magnetic head of the fourth embodiment;

Fig. 22 is a perspective view of a laminated substrate;

Fig. 23 is a perspective view showing laminated substrates as stacked up;

Fig. 24 is a diagram illustrating a silicon alkoxide solution while it is being caused to penetrate into a space between laminated substrates;

Fig. 25 is a perspective view showing a conventional magnetic head of the laminated core type;

Fig. 26 is a sectional view showing a conventional thin-film magnetic head; and

Fig. 27 is a front view of the thin-film magnetic head.

DETAILED DESCRIPTION OF EMBODIMENTS

Magnetic heads embodying the invention and processes for producing the heads according to the invention will be described in detail below with reference to the drawings. Throughout the drawings, like parts are designated by like reference numerals. Known structures and manufacturing steps will not be described.

First Embodiment

With reference to Fig. 1, the present embodiment, i.e., a magnetic head of the laminated core type for high-frequency use, includes a first core half segment 1a which has a coil groove 4 and a cutout 4a above and continuous with the groove 4. The cutout 4a determines the lower end of a magnetic gap 11, i.e., the depth thereof. At the portion where the first and second core half segments 1a, 1b are opposed to each other face-to-face, a nonmagnetic oxide layer 14 of $SiO_2$ or the like is provided over the entire area of the faces thereof joined together. The oxide layer 14 has a thickness equal to the width of the gap and is formed from a silicon alkoxide solution or like metal alkoxide solution by converting the solution to a gel and solidifying the gel. The two core half segments 1a, 1b are firmly bonded together face-to-face with the nonmagnetic oxide layer 14, which serves not only as a joint layer but also as a gap spacer for forming the operating gap 11.

Next, an example of process for producing the magnetic head will be described.

With reference to Fig. 2, a laminated block 15 comprises nonmagnetic substrates 2 of $ZnO-Al_2O_3-SiO_2$ crystallized glass and laminated thin films 3 of Sendust and $SiO_2$ which are arranged alternately. First, the block 15 is cut to prepare a pair of core blocks 18a, 18b having the laminated thin films 3 inclined at a specified azimuth angle with respect to the cut surfaces. As is already known, the laminated block 15 can be prepared by alternately forming over the surface of the nonmagnetic substrate 2 thin Sendust films,2 to 7 micrometers in thickness,and thin $SiO_2$ films having a thickness of 0.1 to 0.5 micrometer to form the laminated thin film 3 having 3 to 6 layers, placing laminated substrates thus obtained one over another, and bonding the laminated substrates to one another with glass. Many pairs of core block half segments 18a, 18b can be prepared when the laminated block 15 is of an increased size.

Next as shown in Fig. 3, a coil groove 4 is formed in the gap defining face 19 of one of the core block half segments, 18a, across the laminated thin films 3.

Subsequently, the core block half segment 18a is bonded to the other core block half segment 18b with a nonmagnetic oxide layer 14 to prepare a core block 20 as shown in Fig. 4. The step of preparing the core block 20 will be described below in greater detail.

With reference to Fig. 5A, a spacer 17 of $SiO_2$, $Al_2O_3$, $TiO_2$ or the like having a thickness equal to the desired gap width (e.g., of 0.2 to 0.25 micrometer) is formed on each of the four corners of one of the two core block half segments 18a, 18b on the joint surface thereof. The gap defining faces 19, 19 of the segments 18a, 18b are then subjected to ultrasonic cleaning and ultraviolet cleaning and are thereafter fitted to each other with each laminated thin film 3 opposed to the corresponding film 3.

Next, a silicon alkoxide solution 21 comprising, for example, a silicon alkoxide (e.g., tetraethoxysilane $Si(OC_2H_5)_4$, $H_2O$ required for hydrolysis, an acid (e.g., HCl) serving as a catalyst and a solvent (e.g., ethanol $C_2H_5OH$) is caused to penetrate into the space between the gap defining faces 19, 19 of the pair of core block half segments 18a, 18b thus arranged face-to-face, utilizing surface tension, as shown in Fig. 5B.

Fig. 8 (a) shows the silicon alkoxide solution 21 as filled in the space between the core block half segments 18a, 18b. Silicon alkoxide particles 22 are present in the solution 21.

Next, the assembly of segments 18a, 18b with the silicon alkoxide solution 21 penetrating into the space therebetween through the above step is heated under the conditions illustrated in Fig. 7, i.e., by the primary heating step of heating the assembly at 200° C for 2 hours and the subsequent secondary heating step of heating the assembly at 500° C for 2 hours. Through these heating steps, the silicon alkoxide particles in the solution 21 are first subjected to hydrolysis as represented by Equation (1), and the resulting $Si(OH)_4$ are polymerized to form $SiO_2$ particles as represented by Equation (2), with the result that the solution between the core block half segments 18a, 18b becomes a sol with a rise in viscosity.

$$nSi(OC_2H_5)_4 + 4nH_2O \rightarrow nSi(OH)_4 + 4nC_2H_5OH \quad (1)$$

$$nSi(OH)_4 \rightarrow nSiO_2 + 2nH_2O \quad (2)$$

In actuality, the hydrolysis takes place substantially as represented by the following equation.

$$M(OR)n + xH_2O \rightarrow M(OH)_x(OR)_{n-x} + xROH \quad (3)$$

wherein M is a metal, and R is an alkyl group.

If x is equal to n, all the OH groups are hydrolized. Actually, however, x is not equal to n, and Equation (1) represents an ideal state of Equation (3). The above-mentioned polymerization reaction occurs through the dehydration reaction and dealcoholization reaction represented by the following equations.

Dehydration reaction

-M-OH + H-O-M → -M-O-M + H₂O

Dealcoholization reaction

-M-OH + R-O-M → -M-O-M + ROH

Fig. 8 (b) shows that the silicon alkoxide particles 22 are converted to $SiO_2$ particles 23 by the reactions of Equations (1) and (2), with the solution 21 changed to a sol. The $SiO_2$ particles further aggregate into agglomerates 24 as shown in Fig. 8 (c), with the sol changed to a gel. The aggregation further proceeds through the secondary heating step at 500° C, with the result that the solution solidifies to a nonmagnetic oxide layer 14 of solid $SiO_2$ as seen in Fig. 8 (d).

Through the above reactions, $H_2O$ is dissociated from the SiOH present in the surface layers of the nonmagnetic substrates 2 at the gap defining face 19 of each of the core block half segments 18a, 18b and also from the OH group in the solution 21, and the bond of -Si-O-Si- is produced at the interface between the nonmagnetic oxide layer 14 and each core block half segment 18a (18b). The layer 14 serves as a joint layer, forming the single core block 20. The nonmagnetic oxide layer 14 has a thickness equal to the desired gap width and serves also as a gap spacer.

In the case where the nonmagnetic substrate is made of a material other than crystallized glass, the OH present in the oxide layer at the surface of the substrate also reacts in the same manner as above, producing the bond of -M-O-Si- (wherein M is a metal atom in the nonmagnetic substrate), so that the nonmagnetic oxide layer 14 serves the function of joint layer.

The primary heating step at 200° C shown in Fig. 7 serves to vaporize the $H_2O$ and alcohol from the silicone alkoxide solution to effect promoted solidification. Even of the gap defining faces have a large area, the primary heating step fully vaporizes these liquids.

The core block 20 completed by the above step is machined to form a curved slide face 12 along the line A in Fig. 5A, as seen in Fig. 6. The core block 20 is further sliced into pieces each having the laminated thin film 3 to obtain a plurality of head chips. At this time, the spacers 17 on the core block 20 are cut off.

Finally, a cutout groove 13 is formed at each side of the head chip, wheareby the magnetic head of Fig. 1 is completed. The cutout 4a is formed at the upper end of the coil groove 4 by forming the cutout groove 13.

With the magnetic head described above, the nonmagnetic oxide layer 14 providing the magnetic gap 11 serves as the jointlayer for bonding the pair of core half segments 1a, 1b to each other. The glass grooves 9, 8a, 8b shown in Fig. 25 can therefore be dispensed with. Since the pair of core half segments 1a, 1b are bonded to each other face-to-face by the nonmagnetic oxide layer 14 which is provided between the joint faces over the entire area thereof, the bonding area contributing to the bond strength is larger than in the conventional magnetic head to give sufficient bond strength.

The nonmagnetic oxide layer 14, although having heat resistance of at least 1000° C, can be formed at a relatively low temperature of about 500° C as already stated. This simplifies the production process.

The silicon alkoxide solution 21 used as the starting solution for forming the nonmagnetic oxide layer 14 in the above process is a solution of tetraethoxy silane $Si(OC_2H_5)_4$ in an acid (HCl) and a solvent ($C_2H_5OH$), so that the solution contains a sufficient amount of OH groups. Accordingly, even if the amount of oH groups decreases to some extent during the change of the solution to a sol, a sufficient quantity of OH groups remains, contributing to the bonding of the atom in the nonmagnetic oxide layer 14 to the atom present in the surface layers of the nonmagnetic substrate 2 and the laminated thin film 3 as already described. As a result, the pair of core block half segments 18a, 18b are bonded together firmly.

Besides $SiO_2$, various compounds are useful for the nonmagnetic oxide layer 14, such as $Al_2O_3$, $TiO_2$, $ZrO_2$, $GeO_2-SiO_2$, $TiO_2-SiO_2$, $In_2O-SnO$, $Na_2O-B_2O_3-SiO_2$, $BaTiO_3$, $PbTiO_3$ and $KTiO_3$. The starting solutions for forming these compounds can be prepared using various known oragnic metal compounds having an active group which undergoes hydrolysis and polymerization. Examples of useful compounds are metal alkoxides such as aluminum isopropoxide $Al(OC_3H_7)_3$, metal acetylacetonates such as indium acetylacetonate $In(COCH_2COCH_3)$ and metal carboxylates such as lead acetate $Pb(CH_3COO)_2$. The solutions of these compounds contain OH groups and/or OR groups.

In the case of the magnetic head of Fig. 1, not only the core half segments 1a, 1b are bonded together with high strength, but the nonmagnetic layer 14 also has satisfactory heat resistance and is suitable for forming a gap of decreased width. Moreover, since the back gap portion is formed also by the nonmagnetic oxide layer 14 of very small thickness, the magnetic resistance of the back gap portion is much lower than in the conventional magnetic head.

The production process shown in Figs. 2 to 8 does not require complex grooving or heating at a high temperature, is extremely simple and therefore achieves a reduction in the production cost.

The pair of core block half segments 18a, 18b shown in Fig. 5A can alternatively be bonded together by causing, for example, the silicon alkoxide solution 21 to penetrate into the front gap portion F providing the magnetic gap and causing a solution 210 of iron alkoxide, iron nitrate or like magnetic metal organic compound into the back gap portion R as seen in Fig. 5C. For example, when the solution 210 contains an iron alkoxide $Fe_2(OR)_3$, alcohol ROH, $H_2O$, and ammonia as a catalyst, presumably the following reactions take place.

Hydrolysis

$$nFe_2(OR)_3 + 3nH_2O \rightarrow nFe_2(OH)_3 + 3nROH$$

Polymerization reaction

$$2nFe_2(OH)_3 \rightarrow 2nFe_2O_3 + 3H_2O$$

When the magnetic head is completed as shown in Fig. 1 in this case, the thin ferromagnetic film of $Fe_2O_3$ forming the back gap portion not only affords high bond strength but assures a further reduction in the magnetic resistance at the back gap portion.

## Second Embodiment

This embodiment provides a thin-film magnetic head. Unlike the conventional thin-film magnetic head of Figs. 26 and 27 wherein the glass 71 is used for bonding the protective plate, a protective plate 58 is bonded to the upper surface 57 of a protective layer 56 with a nonmagnetic oxide layer 6 as seen in Figs. 9 and 10.

A process for producing the thin-film magnetic head will be described with reference to Figs. 11 to 14.

As shown in Fig. 11, a lower magnetic layer 51, conductor coil layer 52, layer insulating layer 53, gap spacer 54 and upper magnetic layer 55 are first formed over the upper surface of a substrate 5 made of Ni-Zn ferrite or like magnetic material, by sputtering or like thin film forming technique, photolithography, ion beam etching or like dry etching technique, whereby a head chip 50 is prepared.

Next as seen in Fig. 12, the above-mentioned protective layer 56 having a flat upper surface and made of $SiO_2$, $TiO_2$, $Al_2O_3$ or like nonmagnetic insulating material is formed over the head chip 50. The protective layer 56 has a thickness T of 2 micrometers at the thinnest portion thereof. The protective layer 56 is formed by depositing the nonmagnetic insulating material on the chip 50 to such a level that every portion of the layer is positioned above the uppermost portion of the chip 50, then applying a resist to the upper surface of the resulting film to form a flat surface, and subjecting the resulting surface to ion beam etching to make the upper surface of the film as flat as the resist upper surface.

Subsequently, a spacer 59 of $SiO_2$, $TiO_2$, $Al_2O_3$ or the like having a thickness of up to 1 micrometer is formed on each of the four corners of the upper surface of the protective layer 56, and the upper surface of the layer 56 is subjected to ultrasonic cleaning and ultraviolet cleaning. The protective plate 58 which is made of $BaTiO_3$ or like nonmagnetic material is then placed over the protective layer 56 with the spacers 59 interposed therebetween as shown in Fig. 13.

A silicon alkoxide solution 21 is thereafter caused to penetrate into the space between the protective layer 56 and the protective plate as seen in Fig. 14 and heated under the conditions shown in Fig. 7 as in the first embodiment, whereby the solution 21 is changed to a sol and then to a gel, eventually forming the nonmagnetic oxide layer 6 which is made of solid $SiO_2$.

The same chemical reactions as is the case with the first embodiment occur in this process. $H_2O$ is dissociated from the SiOH in the silicon alkoxide solution 21 and from the OH in the oxide layer at the surface of the protective layer 56, as well as of the protective plate 58, and the bond of -A-O-Si (wherein A is an atom in the protective layer or plate) is produced at the interface between the nonmagnetic oxide layer 6 and each of the protective layer 56 and the protective plate 58, with the result that the protective plate 58 is firmly bonded to the upper surface of the protective layer 56 as shown in Fig. 9.

When the assembly is thereafter externally machined as specified, the thin-film magnetic head is completed.

The thin-film magnetic head has no layer of soft glass exposed at the face thereof to be in sliding contact with the recording medium. Although the slide face of the conventional thin-film head wears unevenly to result in impaired recording-reproduction characteristics, the present head is free of this drawback since the nonmagnetic oxide layer 6 is extremely thin.

Like the first embodiment, the second embodiment has the advantage that the production process is simplified.

As is the case with the first embodiment, solutions of various organic metal compounds are usable as the starting solution for forming the nonmagnetic oxide layer 6.

## Third Embodiment

Fig. 15 shows a laminated magnetic head for high-frequency use wherein a pair of core half segments 1a, 1b are bonded to each other with a glass 10 having a low melting point and filled in glass grooves 8a, 8b, 9 as conventionally practiced. However, a laminated thin film 3 is bonded to nonmagnetic substrates 201 to form each core half segment, with a nonmagnetic oxide layer 14 in place of the glass layer 16 shown in Fig. 25.

The magnetic head is produced by the process to be described below with reference to Figs. 16 to 18.

First as shown in Fig. 16, a laminated substrate 25 can be prepared by alternately forming ferromagnetic thin films of Sendust or the like each having a thickness of 2 to 7 micrometers and insulating thin films of $SiO_2$ or the like and each having a thickness of 0.1 to 0.5 micrometer, over the upper surface of a nonmagnetic substrate 201 of crystallized $ZnO-Al_2O_3-SiO_2$ glass to thereby obtain a laminated thin film 3 having 3 to 6 layers. The film 3 is made to have a thickness approximately equal to the width of the contemplated track.

Next, a plurality of such laminated substrates 25 are prepared. A spacer (not shown) up to 1 micrometer in thickness is formed on each of the four corners of each substrate 25 on the surface of the laminated thin film 3 thereof, and the upper surface of the film 3 is then subjected to ultrasonic cleaning and ultraviolet cleaning. The plurality of laminated substrates 25 are stucked up with the spacers interposed therebetween, and a nonmagnetic substrate 201 is placed over the uppermost laminated substrate 25 as shown in Fig. 17.

Subsequently, a silicon alkoxide solution 201 is caused to penetrate into the space between each laminated thin film 3 of the assembly of Fig. 17 and the nonmagnetic substrate 201 adjacent thereto and is thereafter heated under the conditions shown in Fig. 7 as is the case with the first embodiment. Consequently, the solution 21 changes to a sol and then to a gel and eventually forms a nonmagnetic oxide layer 14 of solid $SiO_2$.

In this step, the SiOH present at the surfaces of the nonmagnetic substrate 201 and the laminated thin film 3, and the OH groups in the silicon alkoxide solution 21 release $H_2O$, and the bond of -Si-O-Si- is formed at the interface between the nonmagnetic oxide layer 14 and the nonmagnetic substrate 201 and at the interface between the layer 14 and the laminated thin film 3. Thus each nonmagnetic oxide layer 14 serves as a joint layer to form a core block. When the nonmagnetic substrate is made of a material other than the crystallized glass, the OH present in the oxide layer on the substrate surface reacts in the same manner as above to form the bond of -M-O-Si- (wherein M is a metal atom in the nonmagnetic substrate) at the interface.

The core block thus obtained is thereafter subjected to the same steps as in the prior art, whereby the magnetic head shown in Fig. 15 is completed.

With the magnetic head described above, the slide face 12 has exposed thereon the abrasion resistant nonmagnetic oxide layers 14 instead of the soft glass layers conventionally used and very prone to abrasion. This ensures satisfactory contact of the slide face with recording media during use for a prolonged period of time.

Whereas the conventional process requires the application of glass paste to the surface of the laminated thin film 3, baking of the paste and formation of a groove for allowing glass to flow out, the present process necessitates none of these procedures and is therefore extremely simple.

The joint structure afforded by the nonmagnetic oxide layer 14 can be employed also for the magnetic head shown in Fig. 19 and comprising a bulk-type main core 26 of Sendust or like magnetic metal material, and reinforcement substrates 29, 29 provided on the respective sides of the core 26 and each comprising a magnetic portion 27 and a nonmagnetic portion 28. In this case, the nonmagnetic oxide layer 14 can be used for bonding each substrate 29 to the main core 26.

## Fourth Embodiment

Figs. 20 and 21 show a magnetic head wherein a pair of core half segments 1a, 1b have laminated thin films 31, 32, respectively. Each of the laminated thin films is formed on the inner surface of a nonmagnetic substrate 201 and comprises magnetic metal thin films 41, 41 and an insulating thin film 42 formed therebetween. The magnetic metal thin films 41, 41 opposed to each other face-to-face are bonded together with a nonmagnetic oxide layer 14 up to 1 micrometer in thickness, whereby the core segments are joined together.

The nonmagnetic oxide layer 14 is prepared from the same metal alkoxide solution as used in the foregoing embodiments, such as a silicon alkoxide solution containing OH groups, by converting the solution to a gel, followed by solidification. The layer 14 serves as a joint layer for bonding the nonmagnetic substrates 201, 201 together and also as a nonmagnetic insulating layer between the laminated thin films 31, 32.

The magnetic head described is produced by the process to be described below.

First, ferromagnetic metal thin films 41, 41 and insulating thin film 42 are formed as arranged alternately over the upper surface of a nonmagnetic substrate 201 as seen in Fig. 22 to form a laminated substrate 43 having a laminated thin film 31 or 32. The thickness of the laminated thin film 31 or 32 is approximately equal to one-half of the width of the contemplated track.

A plurality of such laminated substrates 43 are prepared, the surface of the thin film on each substrate 43 is subjected to ultrasonic cleaning and ultraviolet cleaning, and the substrates 43 are stacked up with spacers (not shown, up to 1 micrometer in thickness) provided therebetween and with the laminated thin films 31, 32 opposed to each other as shown in Fig. 23.

A silicon alkoxide solution 21 is caused to penetrate into the space between each opposed pair of laminated thin films 31, 32 of the stacked assembly as shown in Fig. 24.

The assembly is thereafter heated in the same manner as already described, whereby the solution 21 is changed to a sol and then to a gel and thereafter solidified into a nonmagnetic oxide layer 14 made of solid $SiO_2$ and having a thickness of up to 1 micrometer.

In the bonding step, the bond of -Si-O-Si-is formed at the interface between the oxide layer 14 and each ferromagnetic metal thin film 41, causing the oxide layer 14 to serve as the joint layer to form a single core block.

The core block is machined in the known manner to complete the magnetic head of Fig. 20.

With the magnetic head described above, the laminated thin films 31, 32, each having a thickness of approximately one-half of the width of the contemplated track, are bonded to each other with the nonmagnetic oxide layer 14 to form a laminated thin film 3 having a thickness approximately equal to the desired track width. Accordingly, the laminated thin film 3 can be formed within a shorter period of time than is the case with the magnetic head of Fig. 15. Moreover, the nonmagnetic oxide layer 14 functions also as an insulating layer for diminishing eddy current losses in the high-frequency range.

The process described above for producing the magnetic head, like those already described, has the advantage that the joint layer having high heat resistance can be formed by a low-temperature heating step.

The description of the foregoing embodiments is given for the purpose of illustrating the present invention and should not be construed as limiting the claimed invention or reducing the scope thereof. The construction of the magnetic head of the invention is not limited to those of the above embodiments but can be modified variously by one skilled in the art without departing from the scope of the invention as defined in the appended claims.

For example, the invention can be embodied as a magnetic head which has the structure of joint between the pair of core half segments 1a, 1b afforded by the nonmagnetic oxide layer 14 shown in Fig. 1 and also the structure of joint between the laminated thin film 3 and the nonmagnetic substrate 201 shown in Fig. 15, and also as a process for producing this magnetic head.

## Claims

1. A magnetic head having a pair of magnetic core half segments opposed to each other face-to-face, a magnetic gap defined by the opposed faces of the two core half segments, a joint layer bonding the two core half segments to each other, a coil groove formed in the joint face of at least one of the core half segments, and a slide face formed over the two core half segments for sliding contact with recording media, the magnetic head being characterized in that the joint layer is formed by a nonmagnetic oxide layer extending over the entire area of the joint faces of the two core half segments or over at least a local area thereof closer to the slide face than the coil groove, the portion of the nonmagnetic oxide layer at the local area providing the magnetic gap.

2. A magnetic head as defined in claim 1 wherein the nonmagnetic oxide layer is formed by solidifying a nonmagnetic oxide solution.

3. A magnetic head as defined in claim 1 wherein the nonmagnetic oxide layer comprises $SiO_2$.

4. A magnetic head as defined in claim 1 wherein the nonmagnetic oxide layer is formed only over the local area of the joint faces of the two core half segments, and a magnetic oxide layer is formed over an area thereof on the opposite side of the coil groove to the magnetic gap, the joint layer being formed by the magnetic oxide layer and the nonmagnetic oxide layer.

5. A process for producing a magnetic head by arranging a pair of magnetic core half segments as opposed to each other face-to-face and bonding the two core half segments to each other by a joint layer with an magnetic gap defined by the opposed faces of the core half segments, the process being characterized in that the process comprises the steps of preparing a pair of core half members for providing the pair of core half segments, arranging the pair of core half members as opposed to each other face-to-face with a predetermined clearance formed therebetween and causing a solution of an organic metal compound to penetrate into the clearance, solidifying the solution by heating to form a nonmagnetic oxide layer and bonding the pair of core half members to each other with the nonmagnetic oxide layer, and machining the resulting assembly to obtain a head chip having the magnetic gap as provided by a portion of the nonmagnetic oxide layer.

6. A process as defined in claim 5 wherein the organic metal compound solution is changed to a sol and then to a gel and eventually solidified by the heating.

7. A process as defined in claim 5 wherein the organic metal compound solution is a metal alkoxide solution.

8. A process for producing a thin-film magnetic head by forming over a substrate a lower magnetic layer, a conductor coil layer, a layer insulating layer covering the coil layer, a gap spacer providing a magnetic gap and an upper magnetic layer by deposition to prepare a head chip, and bonding a protective plate to the upper portion of the head chip with a joint layer, the process being characterized in that the protective plate is bonded to the head chip by the steps of forming on the head chip a protective layer made of a nonmagnetic material and having a flat upper surface, causing a solution of organic metal compound containing hydroxyl groups (OH groups) or alkoxyl groups (OR groups) to penetrate into a space between the upper surface of the protective layer and the protective plate as placed thereover, and solidifying the solution by heating to form a nonmagnetic oxide layer and bond the protective plate to the protective layer with the nonmagnetic oxide layer.

9. A process as defined in claim 8 wherein the organic metal compound solution is changed to a sol and then to a gel and eventually solidified by the heating.

10. A process as defined in claim 8 wherein the organic metal compound solution is a metal alkoxide solution.

11. A magnetic head having a pair of core half segments opposed to each other face-to-face and bonded to each other with a magnetic gap defined by the opposed faces of the core half segments, each of the core half segments comprising a magnetic main core portion and a nonmagnetic substrate bonded to at least one surface of the main core portion by a joint layer, the magnetic head being characterized in that the joint layer is in the form of a nonmagnetic oxide layer prepared by solidifying a solution of organic metal compound containing hydroxyl groups (OH groups) and/or alkoxyl groups (OR groups).

12. A magnetic head as defined in claim 11 wherein each of the core half segments has two nonmagnetic substrates provided over the respective surfaces of the main core portion, and the main core portion comprises a thin ferromagnetic metal film composed of one or a plurality of layers and formed over the surface of one of the nonmagnetic substrates, the nonmagnetic oxide layer being formed between the surface of the thin ferromagnetic metal film and the other nonmagnetic substrate.

13. A process for producing a magnetic head by arranging a pair of core half segments as opposed to each other face-to-face and bonding the two core half segments to each other with a magnetic gap defined by the opposed faces of the core half segments, each of the core half segments comprising a magnetic main core portion and a nonmagnetic substrate bonded to at least one surface of the main core portion by a joint layer, the process being characterized in that the process comprises the steps of arranging a plate providing the nonmagnetic substrate and a magnetic material providing the main core portion as opposed to each other face-to-face with a predetermined clearance formed therebetween and causing a solution of organic metal compound containing hydroxyl groups (OH groups) and/or alkoxyl groups (OR groups) to penetrate into the clearance, solidifying the solution by heating to form a nonmagnetic oxide layer and bond the plate and the magnetic material to each other with the nonmagnetic oxide layer, and preparing a head chip of specified shape from the resulting assembly.

14. A process as defined in claim 13 wherein the organic metal compound solution is changed to a sol and then to a gel and eventually solidified by the heating.

15. A process as defined in claim 13 wherein the organic metal compound solution is a metal alkoxide solution.

16. A magnetic head having a pair of core half segments opposed to each other face-to-face and bonded to each other with a magnetic gap defined by the opposed faces of the core half segments, each of the core half segments comprising a magnetic main core portion and two nonmagnetic substrates provided on the respective sides of the main core portion, the magnetic head being characterized in that the main core portion comprises a magnetic thin film composed of one or a plurality of layers and formed over each of the opposed surfaces of the two nonmagnetic substrates, and a joint layer provided between the magnetic thin films on the respective nonmagnetic substrates, the joint layer being formed by a nonmagnetic oxide layer.

17. A magnetic head as defined in claim 16 wherein the nonmagnetic oxide layer is formed by solidifying a nonmagnetic oxide solution.

18. A process for producing a magnetic head by arranging a pair of core half segments as opposed to each other face-to-face and bonding the two core half segments to each other with a magnetic gap defined by the opposed faces of the core half segments, each of the core half segments comprising a magnetic main core portion and two nonmagnetic substrates provided on the respective sides of the main core portion, the process being characterized in that the process comprises the steps of forming a magnetic thin film over the surface of a plate providing each of the nonmagnetic substrates for the thin film to constitute a part of the main core portion and to thereby obtain each of a pair of laminated substrates, arranging the laminated substrates as opposed to each other face-to-face with a predetermined clearance formed between the magnetic thin films thereof and causing a solution of organic metal compound to penetrate into the clearance, solidifying the solution by heating to form a nonmagnetic oxide layer and bonding the laminated substrates to each other with the nonmagnetic oxide layer, and preparing a head chip of specified shape from the resulting assembly.

19. A process as defined in claim 18 wherein the organic metal compound solution is changed to a sol and then to a gel and eventually solidified by the heating.

20. A process as defined in claim 18 wherein the organic metal compound solution is a metal alkoxide solution.

# FIG.1

# FIG.2

## FIG.3

## FIG.4

## FIG.5A

## FIG.5B

## FIG.5C

## FIG.6

EP 0 382 244 A2

FIG.7

FIG.8

(a)

(b)

(c)

(d)

# FIG.9

# FIG.10

FIG.11

FIG.12

FIG.13

FIG.14

FIG.15

FIG.16

FIG.17

## FIG.18

## FIG.19

## FIG. 20

## FIG. 21

## FIG.22

## FIG.23

## FIG.24

# FIG.25

## FIG. 26

## FIG. 27